# EUROPEAN PATENT APPLICATION

(11) **EP 4 845 176 A1**
(43) Date of publication of application: **25.11.2026**
(21) Application number: 25213182.6
(22) Date of filing: 04.11.2025
(51) Int. Cl.: H04N 25/46, H04N 23/67, H04N 23/741, H04N 25/585, H04N 25/704, H04N 25/77, H04N 25/78

(54) **IMAGE SENSING DEVICE**

(30) Priority: 23.05.2025 KR 20250067630
(71) Applicant: SK hynix Inc., Bubal-eub Icheon-si Gyeonggi-do 17336 (KR)
(72) Inventor: YUN, Gun Hee, Icheon-si, Gyeonggi-do 17336 (KR); PARK, Han Sol, Icheon-si, Gyeonggi-do 17336 (KR); KIM, Kang Ho, Icheon-si, Gyeonggi-do 17336 (KR); CHOI, Jeong Ik, Icheon-si, Gyeonggi-do 17336 (KR)
(74) Representative: Isarpatent

(57) **Abstract**

An image sensing device includes a pixel array configured to output a pixel signal; and a readout circuit configured to read out, from the pixel array, the pixel signal to output image data. The pixel array includes high conversion gain (HCG) pixels configured to sense high conversion gain phase-difference detection (HCG PD) data, and low conversion gain (LCG) pixels configured to sense low conversion gain phase-difference detection (LCG PD) data. The readout circuit is also configured to synthesize the HCG PD data and the LCG PD data to generate synthesized PD data as the image data.

## Description

### TECHNICAL FIELD

The technology and implementations disclosed in this patent document generally relate to an image sensing device capable of generating a high dynamic range (HDR) image.

### BACKGROUND

An image sensing device may capture optical images by converting light into electrical signals using a photosensitive semiconductor material which reacts to light. With the development of automotive, medical, computer and communication industries, the demand for high-performance image sensing devices has been increasing in various fields such as smartphones, digital cameras, game machines, Internet of Things (IoT), robots, surveillance cameras and medical micro cameras.

Recently, in order to provide high-quality images, interest in HDR images is rapidly increasing, and various techniques capable of acquiring HDR images are being developed.

In addition, there is increasing demand for an image sensing device equipped with a phase-difference detection autofocus (PDAF) function that automatically focuses by detecting a phase difference between detected images. The PDAF function may be useful in a high-speed photographing mode or in a moving-image photographing mode (also called a video mode) that requires rapid focus adjustment.

### SUMMARY

Various embodiments of the present disclosure relate to an image sensing device that can generate a single phase-difference detection image by synthesizing phase-difference detection images having different resolutions under various luminance conditions.

In accordance with an embodiment of the present disclosure, an image sensing device may include: a pixel array configured to output a pixel signal; and a readout circuit configured to read out, from the pixel array, the pixel signal to output image data. The pixel array may include high conversion gain (HCG) pixels configured to sense high conversion gain phase-difference detection (HCG PD) data, and low conversion gain (LCG) pixels configured to sense low conversion gain phase-difference detection (LCG PD) data. The readout circuit may also be configured to synthesize the HCG PD data and the LCG PD data to generate synthesized PD data as the image data.

It is to be understood that both the foregoing general description and the following detailed description of the present disclosure are illustrative and explanatory and are intended to provide further explanation of the disclosure as claimed.

### BRIEF DESCRIPTION OF THE DRAWINGS

The above and other features and beneficial aspects of the present disclosure will become readily apparent with reference to the following detailed description when considered in conjunction with the accompanying drawings.
FIG. 1 is a block diagram illustrating an example of an imaging device according to an embodiment of the present disclosure.
FIG. 2 is a diagram illustrating an example of a pixel array shown in FIG. 1 according to an embodiment of the present disclosure.
FIG. 3 is a detailed block diagram illustrating an example of a readout circuit shown in FIG. 1 according to an embodiment of the present disclosure.
FIGS. 4A to 4C are diagrams illustrating example operations of a phase-difference detection (PD) data processor shown in FIG. 3 according to an embodiment of the present disclosure.
FIGS. 5A to 5C are graphs illustrating example operations of a synthesizer shown in FIG. 2 according to an embodiment of the present disclosure.
FIG. 6 is a flowchart illustrating example operations of the readout circuit shown in FIG. 3 according to an embodiment of the present disclosure.

### DETAILED DESCRIPTION

This patent document provides implementations and examples of an image sensing device capable of generating a high dynamic range (HDR) image that may be used in configurations to substantially address one or more technical or engineering issues and to mitigate limitations or disadvantages encountered in some other image sensing devices. Some embodiments of the present disclosure relate to an image sensing device that can generate a single phase-difference detection image by synthesizing phase-difference detection images having different resolutions under various luminance conditions. In recognition of the issues above, the embodiments of the present disclosure can reduce a data rate when transmitting a phase-difference detection (PD) image.

Reference will now be made in detail to some embodiments of the present disclosure, examples of which are illustrated in the accompanying drawings. Wherever possible, the same reference numbers will be used throughout the drawings to refer to the same or like parts. While the disclosure is susceptible to various modifications and alternative forms, specific embodiments thereof are shown by way of example in the drawings. However, the disclosure should not be construed as being limited to the embodiments set forth herein.

Hereinafter, various embodiments will be described with reference to the accompanying drawings. However, it should be understood that the present disclosure is not limited to specific embodiments, but includes various modifications, equivalents and/or alternatives of the embodiments. The embodiments of the present disclosure may provide a variety of effects capable of being directly or indirectly recognized through the present disclosure.

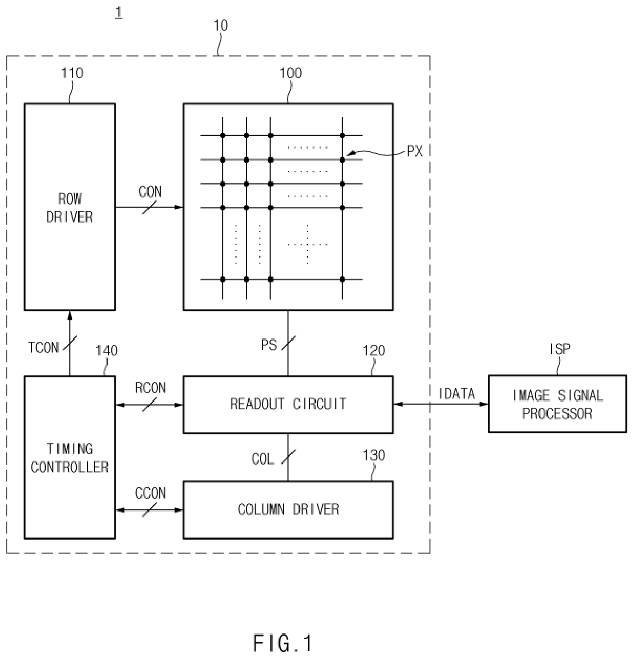

FIG. 1 is a block diagram illustrating an example of an imaging device 1 according to embodiments of the present disclosure.

Referring to FIG. 1, the imaging device 1 may refer to a device, for example, a digital still camera for photographing still images or a digital video camera for photographing moving images. For example, the imaging device 1 may be implemented as a Digital Single Lens Reflex (DSLR) camera, a mirrorless camera, or a smartphone, and others. The imaging device 1 may include a device having both a lens and an image pickup element such that the device can capture (or photograph) a target object and can thus create an image of the target object.

The imaging device 1 may include an image sensing device 10 and an image signal processor (ISP).

The image sensing device 10 may be a complementary metal oxide semiconductor image sensor (CIS) for converting an incident light into an electrical signal. The image sensing device 10 may include a pixel array 100, a row driver 110, a readout circuit 120, a column driver 130, and a timing controller 140. The components of the image sensing device 10 illustrated in FIG. 1 are discussed by way of example only, and the present disclosure encompasses numerous other changes, substitutions, variations, alterations, and modifications.

The pixel array 100 may include a plurality of imaging pixels (PXs) arranged in a two-dimensional (2D) pixel array including rows and columns. In other words, the plurality of imaging pixels (PXs) may be consecutively arranged in a column direction and a row direction. In another example, the plurality of imaging pixels (PXs) may be arranged in a three-dimensional (3D) pixel array. The plurality of imaging pixels may convert an optical signal into an electrical signal on a unit pixel basis or a pixel group basis, where pixels in a pixel group share at least certain internal circuitry.

The pixel array 100 may receive, from the row driver 110, pixel control signals (CON), including a selection signal, a reset signal, a conversion gain control signal, and a transfer signal. Upon receiving the pixel control signals (CON), corresponding imaging pixels in the pixel array 100 may be activated to perform the operations corresponding to the selection signal, the reset signal, the conversion gain control signal, and the transfer signal. Each of the pixels (PXs) may generate photocharges corresponding to the intensity (or illuminance) of incident light, and may generate an electrical signal having a magnitude corresponding to the amount of generated photocharges, thereby detecting the incident light. A pixel signal (PS) generated by some of the plurality of pixels (PXs) may be used as a signal for autofocus.

The plurality of pixels (PXs) may include pixels for phase-difference detection (hereinafter referred to as "PD") to perform the autofocus operation. For example, the plurality of pixels (PXs) may include a high conversion gain (HCG) pixel for sensing high conversion gain phase-difference detection (HCG PD) data having a high conversion gain, and a low conversion gain (LCG) pixel for sensing low conversion gain phase-difference detection (LCG PD) data having a low conversion gain.

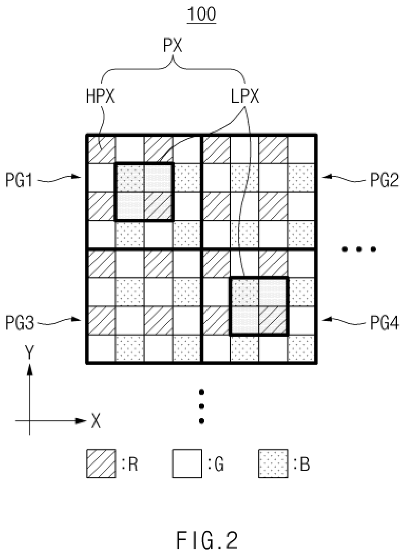

The configuration of the pixel array 100 including the HCG pixels and LCG pixels will be described in more detail later with reference to FIG. 2.

The present disclosure has disclosed, by way of example, that an analog gain has a high conversion gain and a low conversion gain. However, the scope or spirit of the present disclosure is not limited thereto, and the analog gain may further include a middle conversion gain (MCG) between the high conversion gain and the low conversion gain so that a total of three or more analog gains may also be used as necessary.

The row driver 110 may activate the pixel array 100 to perform certain operations on the imaging pixels in the corresponding row based on commands and control signals (TCON) provided by the timing controller 140. In some implementations, the row driver 110 may select one or more imaging pixels arranged in one or more rows of the pixel array 100. The row driver 110 may generate a row selection signal to select one or more rows among the plurality of rows.

The row driver 110 may sequentially enable the pixel reset signal for resetting imaging pixels (PXs) corresponding to at least one selected row, and the transfer signal for the pixels (PXs) corresponding to the at least one selected row. Thus, a reference signal and an image signal, which are analog signals generated by each of the imaging pixels (PXs) of the selected row, may be sequentially transferred to the readout circuit 120.

The reference signal may be an electrical signal that is provided to the readout circuit 120 when a sensing node of an imaging pixel (e.g., a floating diffusion region) is reset. The image signal may be an electrical signal that is provided to the readout circuit 120 when photocharges generated by the imaging pixel are accumulated in the sensing node. The reference signal indicating unique reset noise of each pixel and the image signal indicating the intensity of incident light may be generically called a pixel signal as necessary.

The image sensing device 10 may use the correlated double sampling (CDS) to remove undesired offset values of pixels known as the fixed pattern noise by sampling a pixel signal (PS) twice to remove the difference between these two samples. In one example, the correlated double sampling (CDS) may remove the undesired offset value of pixels by comparing pixel output voltages obtained before and after photocharges generated by incident light are accumulated in the sensing node so that only pixel output voltages based on the incident light can be measured.

In some embodiments of the present disclosure, the readout circuit 120 may sequentially sample and hold voltage levels of the reference signal and the image signal, which are provided from each of a plurality of column lines of the pixel array 100, based on the control signal (RCON) received from the timing controller 140.

Image data (IDATA) generated by the readout circuit 120 may have at least two different sensitivities. Here, the sensitivity may mean an increase in amount of image data IDATA (or an increase amount of a response) with respect to an increase in amount of the intensity of incident light. That is, as the sensitivity increases, the amount of increase in image data (IDATA) in response to an increase in the intensity of incident light increases. As the sensitivity decreases, the amount of increase in image data (IDATA) in response to an increase in the intensity of incident light decreases.

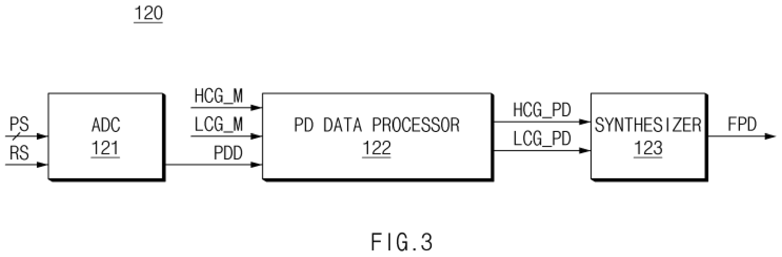

Here, the sensitivity may be determined by the analog gain. The analog gain may refer to a ratio of a voltage level of an analog pixel signal (PS) varying depending on the intensity of the incident light to the size of the image data (IDATA). The configuration of the readout circuit 120 is described herein below with reference to FIG. 3.

The column driver 130 may select a column of the readout circuit 120 upon receiving a control signal (CCON) from the timing controller 140. The column driver 130 may temporarily store image data (IDATA) for the selected column of the readout circuit 120, and may control the readout circuit 120 to sequentially output the image data (IDATA), which are temporarily stored in the selected column of the readout circuit 120.

In some implementations, upon receiving an address signal from the timing controller 140, the column driver 130 may generate a column selection signal (COL) based on the address signal, and may select a column of the readout circuit 120.

The timing controller 140 may control operations of at least one of the row driver 110, the readout circuit 120, and the column driver 130. The timing controller 140 may provide the row driver 110, the readout circuit 120, and the column driver 130 with a clock signal required for the operations of the respective components of the image sensing device 10, a control signal for timing control, and address signals for selecting a row or column.

The image signal processor (ISP) may perform image processing of image data (IDATA) received from the image sensing device 10. The image signal processor (ISP) may reduce noise of image data, and may perform various kinds of image signal processing (e.g. interpolation, synthesis, gamma correction, color filter array interpolation, color matrix, color correction, color enhancement, lens distortion correction, etc.) for image-quality improvement of the image data.

In addition, the image signal processor (ISP) may compress image data that has been created by execution of image signal processing for image-quality improvement, such that the image signal processor (ISP) can create an image file using the compressed image data. Alternatively, the image signal processor (ISP) may recover image data from the image file. In this case, the scheme for compressing such image data may be a reversible format or an irreversible format. As a representative example of such compression format, in the case of using a still image, Joint Photographic Experts Group (JPEG) format, JPEG 2000 format, or the like can be used. In addition, in the case of using moving images, a plurality of frames can be compressed according to Moving Picture Experts Group (MPEG) standards such that moving image files can be created. For example, the image files may be created according to Exchangeable image file format (Exif) standards.

The image signal processor (ISP) may generate an HDR image by synthesizing at least two images having different sensitivities. For example, the image sensing device 10 may output a low-sensitivity image generated from a low-sensitivity pixel with a relatively lower sensitivity, and a high-sensitivity image generated from a high-sensitivity pixel with a relatively higher sensitivity.

The image signal processor (ISP) may combine the low-sensitivity image and the high-sensitivity image, resulting in formation of an HDR image. Here, the low-sensitivity and the high-sensitivity may correspond to relative concepts, and the image sensing device 10 may generate image data (IDATA) having at least N different sensitivities (where N is an integer of 2 or more)

The image signal processor (ISP) may perform HDR processing on image data (IDATA). Here, HDR processing may include linearization processing and Dynamic Range Compression (DRC) processing. DRC processing may include tone mapping (e.g., gamma correction). Depending on such tone mapping, relatively bright areas of the image may be corrected to be dark and relatively dark areas of the image may be corrected to be bright. As HDR processing is performed on the merged image and at least one image, an HDR image with an increased dynamic range and improved SNR (signal to noise ratio) may be generated. Various image processes described above may be performed on the HDR image. However, the scope or spirit of the present disclosure is not limited thereto, and at least one of the various image processes for accurate and clear expression of images may also be performed during HDR processing.

The image signal processor (ISP) may transmit the ISP image data to a host device (not shown). The host device may include a processor (e.g. an application processor) for processing the ISP image data received from the image signal processor (ISP), a memory (e.g. a non-volatile memory) for storing the ISP image data, or a display device (e.g. a liquid crystal display (LCD)) for visually displaying the ISP image data.

In addition, the image signal processor (ISP) may transmit, to the image sensing device 10, a control signal for controlling operations (e.g. whether or not to operate, an operation timing, an operation mode, etc.) of the image sensing device 10.

FIG. 2 is a diagram illustrating an example of the pixel array 100 shown in FIG. 1 according to an embodiment of the present disclosure.

Referring to FIG. 2, the pixel array 100 may include a plurality of pixel groups (PG1~PG4). The pixel group (PG1) and the pixel group (PG4) may be arranged in a diagonal direction, and the pixel group (PG2) and the pixel group (PG3) may be arranged in a diagonal direction.

The embodiment of FIG. 2 illustrates the pixel array 100 having a pattern in which pixel groups (PG1~PG4) including (N × N) pixels (where "N" is a natural number greater than or equal to 2) are repeatedly arranged in a row direction (i.e., a first direction or X-axis direction) and a column direction (i.e., a second direction or Y-axis direction).

For example, the pixel array 100 may include 64 pixels (PXs) arranged in an (8 × 8) matrix structure in the row and column directions. 64 pixels (PXs) acting as a minimum unit of the pixel array 100 may be repeated in the row and column directions, without being limited thereto.

Colors (i.e., red R, green G (for example, Gr and/or Gb), blue B) corresponding to each of the pixel groups (PG1~PG4) may be arranged in a Bayer pattern.

For example, the pixel group (PG1) may include a total of 16 pixels (PXs) arranged in a (4 × 4) matrix and having color filters arranged in a Bayer pattern. The pixel group (PG2) may include a total of 16 pixels (PXs) arranged in a (4×4) matrix and having color filters arranged in a Bayer pattern. The pixel group (PG3) may include a total of 16 pixels (PXs) arranged in a (4 × 4) matrix and having color filters arranged in a Bayer pattern. The pixel group (PG4) may include a total of 16 pixels (PXs) arranged in a (4 × 4) matrix and having color filters arranged in a Bayer pattern.

In each of the pixel groups (PG1~PG4), HCG PD data (HCG_PD) may be sensed through HCG pixels (HPX), and LCG PD data (LCG_PD) may be sensed through LCG pixels (LPX). In some implementations, LCG pixels (LPX) may be included in each of the pixel groups (PG1, PG4).

In the pixel array 100, most of the pixels may be HCG pixels (HPX), and a preset number (a preset ratio) of pixels may be LCG pixels (LPX). The number of LCG pixels (LPX) may be fewer than the number of HCG pixels (HPX). For example, in each of the pixel groups (PG1~PG4), 12 pixels among a total of 16 pixels (PXs) may be HCG pixels (HPX), and 4 pixels among the total of 16 pixels (PXs) may be LCG pixels (LPX). The 4 LCG pixels (LPX) may be arranged adjacent to each other in the row and column directions.

The HCG pixels (HPX) and the LCG pixels (LPX) may be used as phase-difference detection pixels to capture a target object and generate phase signals for autofocus. The phase signals may include information about the positions of the phase detection pixels on the pixel array 100.

In other words, the autofocus operation through phase detection may refer to an operation of detecting a phase difference between a first image generated by some of the pixels for phase detection and a second image generated by others of the pixels for phase detection, calculating a movement distance of the lens from the detected phase difference, adjusting a position of the lens based on the calculated distance, and thus obtaining an in-focus image.

However, the pixel array 100 illustrated in FIG. 2 is merely an example, and other implementations are also possible, and it should be noted that a pixel array 100 in which HCG pixels (HPX) and LCG pixels (LPX) are arranged can also implemented according to various arrangement methods. In addition, the number of HCG pixels (HPX) and LCG pixels (LPX) in the pixel array 100 is not limited thereto and may be sufficiently changed.

The embodiment of the present disclosure has disclosed that the pixel array 100 has red, green, and blue filters, but the scope of the present disclosure is not limited thereto, and at least one of various colors may be sensed by a unit color pixel. In another example, the pixels (PXs) may include color filters such as yellow, cyan, and magenta.

In addition, although the pixel array 100 includes four pixel groups (PG1~PG4) for convenience of description, the number of pixel groups according to the present embodiment is not limited thereto.

In addition, according to the embodiment of the present disclosure, the pixel array 100 is illustrated as being arranged in a Bayer pattern. However, the arrangement of the pixels (PX) can be implemented in various ways, and the pattern of the pixel array 100 is not limited thereto.

FIG. 3 is a detailed block diagram illustrating an example of the readout circuit 120 shown in FIG. 1 according to an embodiment of the present disclosure.

Referring to FIG. 3, the readout circuit 120 may include an analog-to-digital converter (ADC) 121, a phase-difference detection (PD) data processor 122, and a synthesizer 123.

The ADC 121 may sample and hold a pixel signal (PS) for each column, which is output from each column line of the pixel array 100, may convert the resultant pixel signal into a digital signal, and may output the digital signal. The above-described digital signal may include phase-difference detection information (e.g., PD data (hereinafter referred to as PDD).

In some implementations, the ADC 121 may be implemented using a ramp-compare type ADC. The ramp-compare type ADC 121 may include a comparator circuit for comparing the analog pixel signal (PS) with a ramp signal (RS) that ramps up or down over time, and a counter for performing counting until a voltage of the ramp signal (RS) matches the analog pixel signal (PS). The ramp signal (RS) may be generated by a ramp signal generator (not shown).

The PD data processor 122 may process PD data (PDD) based on mode signals (HCG_M, LCG_M) to generate HCG PD data (HCG_PD) and LCG PD data (LCG_PD). For example, the mode signals (HCG_M, LCG_M) may be set by the control signal (RCON).

The mode signals (HCG_M, LCG_M) may include an HCG mode signal (HCG_M) activated in the HCG mode and an LCG mode signal (LCG_M) activated in the LCG mode. The LCG mode may increase a full well capacity (FWC) in an illuminance range (i.e., a high-illuminance range) where the intensity of the incident light is relatively large. Here, FWC may refer to a maximum capacity that can accumulate photocharges. The HCG mode may increase noise performance by increasing the sensitivity in an illuminance range (i.e., a low-illuminance range) where the intensity of the incident light is relatively small. Data processed in the HCG mode will hereinafter be referred to as HCG PD data (HCG_PD), and data processed in the LCG mode will hereinafter be referred to as LCG PD data (LCG_PD).

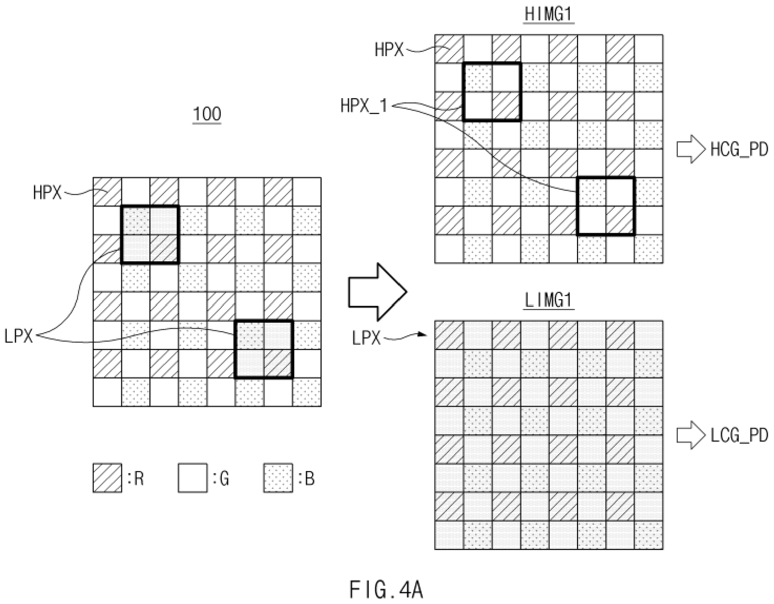

The operation of the PD data processor 122 will be described in more detail with reference to FIGS. 4A to 4C.

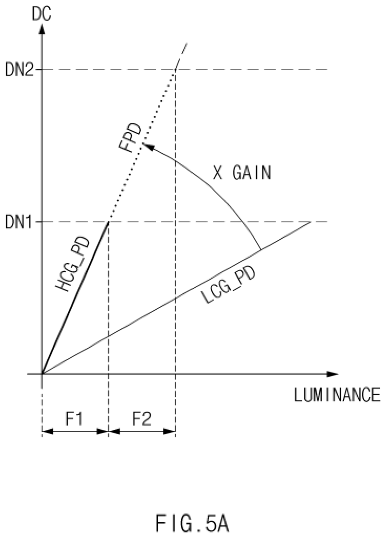

The synthesizer 123 may generate synthesized PD data (FPD) by synthesizing the HCG PD data (HCG_PD) and the LCG PD data (LCG_PD). Here, the synthesized PD data (FPD) may be data included in the image data (IDATA) described above. The operation of the synthesizer 123 will be described in more detail with reference to FIGS. 5A to 5C.

FIGS. 4A to 4C are diagrams illustrating example operations of the phase-difference detection (PD) data processor shown in FIG. 3 according to an embodiment of the present disclosure.

Referring to FIG. 4A, the PD data processor 122 may generate an image set (HIMG1) using the HCG pixels (HPX) included in the pixel array 100. Here, the image set (HIMG1) may have the same full size as the pixel array 100. The PD data processor 122 may process HCG PD data (HCG_PD) based on the image set (HIMG1).

For example, the PD data processor 122 may generate the image set (HIMG1) using the data of the HCG pixels (HPX) without any change. In addition, the PD data processor 122 may add a specific gain to pixel values of some LCG pixels (LPX) in the pixel array 100 with missing information, may restore the resolution of the LCG pixels (LPX) of the missing pixels, and may replace the missing pixels with HCG pixels (HPX_1).

For example, assuming that the HCG is four times the LCG (i.e., the analog gain is four times), the LCG image may be four times darker than the HCG image. As a result, the HCG data may be obtained by multiplying the LCG data by the four times gain. Here, the four times analog gain may be referred to as a dual conversion gain (DCG).

According to another embodiment, in generating the image set (HIMG1), the PD data processor 122 may correct missed pixel values by referring to pixel values of peripheral HCG pixels (HPX) through a defective pixel correction (DPC) algorithm, so that the defective pixels can be restored to HCG pixels (HPX_1).

The PD data processor 122 may generate an image set (LIMG1) using LCG pixels (LPX) included in the pixel array 100. Here, the image set (LIMG1) may have a full size in the same manner as in the pixel array 100. The PD data processor 122 may process LCG PD data (LCG_PD) based on the image set (LIMG1).

For example, the PD data processor 122 may upscale the LCG pixels (LPX) in the pixel array 100 to generate the image set (LIMG1) (i.e., upscale the LCG PD data). Here, upscaling may mean an operation of increasing the resolution of LCG pixels (LPX) with relatively low resolution to increase the size of data (data volume).

According to another embodiment, the PD data processor 122 may generate the image set (LIMG1) by expanding the size of the LCG pixels (LPX) in the pixel array 100. That is, the image set (LIMG1) may be generated by simply copying the pixel values of the LCG pixels (LPX) and expanding the size of such pixels (i.e., expand the LCG PD data).

The embodiment of FIG. 4A may represent an embodiment in which the size of the image set (HIMG1) including the HCG PD data (HCG_PD) or the image set (LIMG1) including the LCG PD data (LCG_PD) is the same as the size of the pixel array 100.

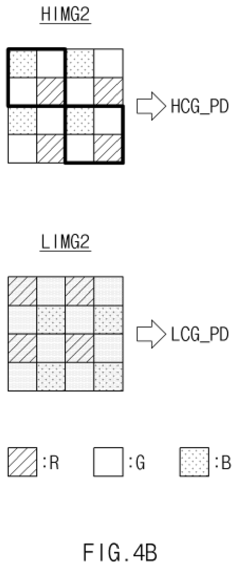

Referring to FIG. 4B, according to another embodiment, the size of the image set (HIMG2) including the HCG PD data (HCG_PD) or the image set (LIMG2) including the LCG PD data (LCG_PD) may be different from the size of the pixel array 100.

In other words, the PD data processor 122 may generate the image set (HIMG2) using the HCG pixels (HPX) included in the pixel array 100. A method for generating the image set (HIMG2) by the PD data processor 122 is the same as in the image set (HIMG1) of FIG. 4A, and as such redundant description thereof will herein be omitted for brevity. However, the PD data processor 122 may process the image set (HIMG2) by interpolating or downscaling the acquired data by a necessary ratio. Accordingly, the image set (HIMG2) may have a size of 1/4 (quarter size) of the pixel array 100. The PD data processor 122 may process the HCG PD data (HCG_PD) based on the image set (HIMG2).

In addition, the PD data processor 122 may generate the image set (LIMG2) using the LCG pixels (LPX) included in the pixel array 100. The method of generating the image set (LIMG2) by the PD data processor 122 is the same as in the image set (LIMG1) of FIG. 4A, and as such redundant description thereof will be omitted for brevity. However, the PD data processor 122 may generate the image set (LIMG2) by upscaling or simply expanding the acquired data. Accordingly, the image set (LIMG2) may have the size of 1/4 of the pixel array 100. The PD data processor 122 may process the LCG PD data (LCG_PD) based on the image set (LIMG2).

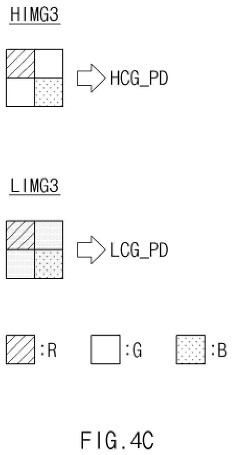

Referring to FIG. 4C, according to another embodiment, an example case is shown where the HCG PD data (HCG_PD) or the LCG PD data (LCG_PD) is less in size than the HCG PD data (HCG_PD) or the LCG PD data (LCG_PD) of FIG. 4B.

In other words, the PD data processor 122 may simply interpolate or bypass the HCG pixels (HPX) included in the pixel array 100 to generate the image set (HIMG3). Here, bypassing may refer to the operation of outputting a raw pixel value of a target pixel without generating a correction value for a target pixel when a difference in pixel value between the target pixel and the peripheral homogeneous pixels is less than a threshold value by referring to pixel values of the peripheral homogeneous pixels located around the target pixel.

Accordingly, the image set (HIMG3) may have a size of 1/16 of the pixel array 100. The PD data processor 122 may process the HCG PD data (HCG_PD) based on the image set (HIMG3).

In addition, the PD data processor 122 may simply interpolate or bypass the LCG pixels (LPX) included in the pixel array 100 to generate the image set (LIMG3). Accordingly, the image set (LIMG3) may have the size of 1/16 of the pixel array 100. The PD data processor 122 may process the LCG PD data (LCG_PD) based on the image set (LIMG3).

FIGS. 5A to 5C are graphs illustrating example operations of the synthesizer 123 shown in FIG. 2 according to an embodiment of the present disclosure.

Referring to FIG. 5A, a horizontal axis in the graph may represent the intensity of incident light (i.e., luminance). A vertical axis may represent digital data (DC), i.e., a digital code value converted by the ADC 121.

The graph of FIG. 5A may represent a code change of other digital data (DC) according to the increase in the intensity of incident light. Here, the digital data (DC) may be a collective term for the HCG PD data (HCG_PD) and LCG PD data (LCG_PD) processed by the PD data processor 122.

The HCG PD data (HCG_PD) may increase with a relatively high slope corresponding to the increase in the intensity of incident light. After reaching a saturation level, the HCG PD data (HCG_PD) may have a level corresponding to a saturation level regardless of the intensity of incident light.

In addition, the LCG PD data (LCG_PD) may increase with a relatively low slope corresponding to the increase in the intensity of incident light. Thereafter, after reaching the saturation level, the LCG PD data (LCG_PD) may have a level corresponding to a saturation level regardless of the intensity of incident light.

The synthesizer 123 may multiply a specific gain, for example, the analog gain, by LCG PD data (LCG_PD) in a time section (F2) located after a time section (F1). In this case, when the code of the HCG PD data (HCG_PD) is not saturated, the synthesizer 123 may perform substitution of the HCG PD data (HCG_PD) to generate synthesized PD data (FPD) (for example, output the HCG PD data as the synthesized PD data). Here, the analog gain may correspond to the dual conversion gain (DCG) described above. The F2 section may represent a synthesis section, and the code of the digital data (DC) in the synthesis section (F2) may change from 'DN1' to 'DN2'. The synthesizer 123 may generate synthetized PD data (FPD) having a large code range to obtain a larger autofocus range.

Here, the F1 section may refer to a signal-to-noise ratio (SNR) limit level. The F1 section may be an invalid response section. In other words, the signal-to-noise ratio (SNR) limit level refers to a threshold value that can satisfy a reference SNR that is predetermined. A response less than the SNR limit level may be treated as an invalid response not satisfying the reference SNR. A response greater than the SNR limit level may be treated as a valid response satisfying the reference SNR. For example, the reference SNR may be determined experimentally in consideration of characteristics of the image sensing device 10 and system requirements.

The saturation level at which digital data (DC) is saturated may refer to a maximum level that indicates the intensity of incident light. The saturation level may be determined by the capability (e.g., capacitance of a photoelectric conversion element) by which the pixel can convert the intensity of incident light into photocharges, the capability (e.g., capacitance of a floating diffusion (FD) region) by which photocharges can be converted into analog signals, and the capability (e.g., an input range of the ADC) by which analog signals can be converted into digital signals.

As the intensity of incident light increases, the response may increase in proportion to the intensity of incident light until the response reaches the saturation level. After the response reaches the saturation level, the response may not increase any further even if the intensity of incident light increases. For example, although the intensity of incident light increases after the response reaches the saturation level, the response may not exceed the saturation level, and may have the same value as the saturation value.

The valid response of each pixel may refer to a response that can indicate the intensity of incident light while satisfying the reference SNR. The range of the intensity of incident light corresponding to the valid response of a pixel may be referred to as a dynamic range of the pixel. That is, the dynamic range of the pixel may refer to the incident-light intensity range in which each pixel has a valid response.

When one of the HCG PD data (HCG_PD) and the LCG PD data (LCG_PD) generated by the PD data processor 122 is selected and transmitted to the image signal processor (ISP), the data rate may be increased and the format of the transmitted data may be different each time. Accordingly, in accordance with the present disclosure, the data rate may be reduced by synthesizing the HCG PD data (HCG_PD) and the LCG PD data (LCG_PD) generated by the PD data processor 122 and transmitting the synthesized data to the image signal processor (ISP).

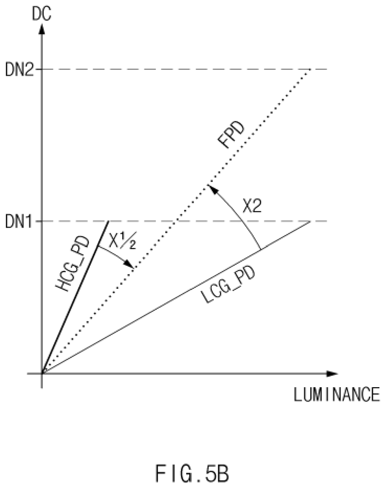

Referring to FIG. 5B, an example in which the synthesizer 123 synthesizes HCG PD data (HCG_PD) and LCG PD data (LCG_PD) with values of the middle range is illustrated.

For example, it can be assumed that HCG is 4 times LCG (i.e., the analog gain is 4 times). Then, the synthesizer 123 may multiply the LCG PD data (LCG_PD) by the analog gain value "2", may multiply the HCG_PD data (HCG_PD) by the analog gain value "1/2", and may thus generate the synthesized PD data (FPD). In this case, a maximum output code of the output digital data (DC) may be denoted by "DN2". Accordingly, a high-quality image may be generated at a low luminance, and an image expressed up to a high digital code range may be generated at a high luminance.

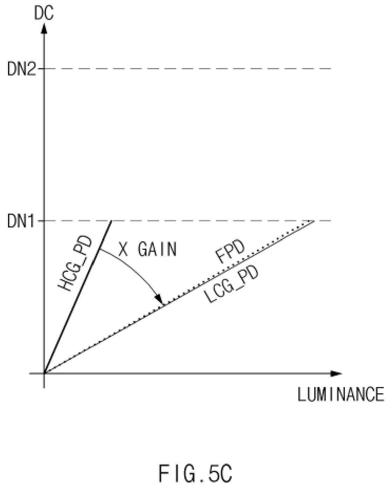

In addition, referring to FIG. 5C, the synthesizer 123 may synthesize data by reducing the data rate of the PD data.

For example, the synthesizer 123 may generate the synthesized PD data (FPD) by applying an analog gain to the HCG PD data (HCG_PD) while maintaining the LCG PD data (LCG_PD). In other words, the synthetized PD data (FPD) may be generated using the LCG PD data (LCG_PD). In this case, the maximum output code of the output digital data (DC) may be lowered to DN1, thereby reducing the amount of data.

In another example, the synthesizer 123 may generate the synthetized PD data (FPD) having a relatively high slope compared to the example of FIG. 5A by applying a high analog gain to both the LCG PD data (LCG_PD) and the HCG PD data (HCG_PD).

In another example, the synthesizer 123 may generate the synthetized PD data (FPD) having a relatively low slope compared to the example of FIG. 5C by applying a low analog gain to both the LCG PD data (LCG_PD) and the HCG PD data (HCG_PD).

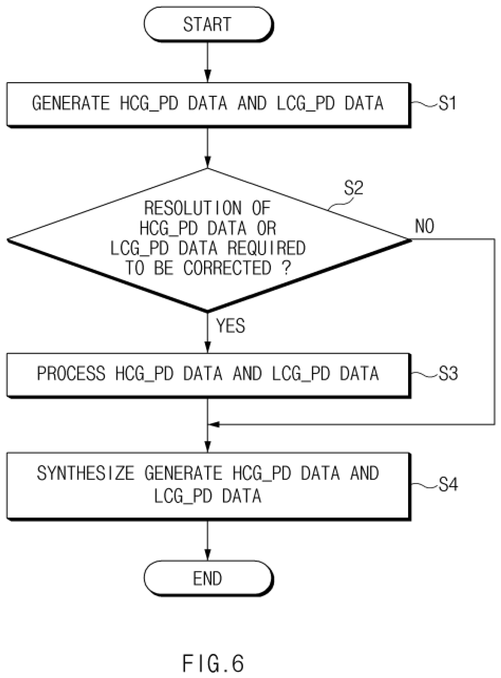

FIG. 6 is a flowchart illustrating example operations of the readout circuit 120 shown in FIG. 3 according to an embodiment of the present disclosure.

Referring to FIG. 6, the ADC 121 may generate PD data (PDD) based on the pixel signal (PS) received from the pixel array 100 illustrated in FIG. 2. Then, the PD data processor 122 may generate HCG PD data (HCG_PD) and LCG PD data (LCG_PD) based on the PD data (PDD) (Operation S1).

The PD data processor 122 may determine whether resolution correction of the HCG PD data (HCG_PD) or the LCG PD data (LCG_PD) is required (Operation S2). For example, in the HCG mode, the HCG mode signal (HCG_M) may be activated to determine whether resolution correction of the HCG PD data (HCG_PD) is required. On the other hand, in the LCG mode, the LCG mode signal (LCG_M) may be activated to determine whether resolution correction of LCG PD data (LCG_PD) is required.

According to an embodiment, a criterion for determining whether resolution correction is necessary may be determined by a user input. For example, the PD data processor 122 may store reference setting information about the size of a target image, the scaling size, the resolution, the synthesis method, the range of the PD data, etc. that are set by the user.

The PD data processor 122 may process the HCG PD data (HCG_PD) if resolution correction of the HCG PD data (HCG_PD) is necessary (Operation S3). For example, the PD data processor 122 may process the HCG PD data (HCG_PD) through methods such as defective pixel correction, scaling, expansion, and gain control based on the reference setting information determined by the user.

The specific method for enabling the PD data processor 122 to process the HCG PD data (HCG_PD) has been described with reference to FIGS. 4A to 4C, and as such redundant description thereof will herein be omitted for brevity.

In addition, the PD data processor 122 may process the LCG PD data (LCG_PD) if the resolution correction of the LCG PD data (LCG_PD) is required (Operation S3). For example, the PD data processor 122 may process the LCG PD data (LCG_PD) through methods such as interpolation, scaling, expansion, and bypassing based on the reference setting information determined by the user.

The specific method for enabling the PD data processor 122 to process the LCG PD data (LCG_PD) has been described with reference to FIGS. 4A to 4C, and as such redundant description thereof will herein be omitted for brevity.

Thereafter, the synthesizer 123 may generate synthetized PD data (FPD) by synthesizing the HCG PD data (HCG_PD) and the LCG PD data (LCG_PD) (Operation S4). That is, the synthesizer 123 may generate one synthetized PD data (FPD) by synthesizing the HCG PD data (HCG_PD) and the LCG PD data (LCG_PD) having different resolutions under various luminance conditions.

According to an embodiment, the method for enabling the synthesizer 123 to synthesize the HCG PD data (HCG_PD) and the LCG PD data (LCG_PD) may be determined by the user. The specific method for enabling the synthesizer 123 to synthesize the HCG PD data (HCG_PD) and the LCG PD data (LCG_PD) has been described with reference to FIGS. 5A to 5C, as such redundant description thereof will herein be omitted for brevity.

As is apparent from the above description, the image sensing device according to the embodiments of the present disclosure may reduce a data rate when transmitting a phase-difference detection (PD) image.

The embodiments of the present disclosure may provide a variety of effects capable of being directly or indirectly recognized through the above-mentioned patent document.

Although a number of illustrative embodiments have been described, it should be understood that modifications and enhancements to the disclosed embodiments and other embodiments can be devised based on what is described and/or illustrated in this patent document.

## Claims

1. An image sensing device comprising:
a pixel array configured to output a pixel signal; and
a readout circuit configured to:
read out, from the pixel array, the pixel signal to output image data, wherein the pixel array includes high conversion gain (HCG) pixels configured to sense high conversion gain phase-difference detection (HCG PD) data, and low conversion gain (LCG) pixels configured to sense low conversion gain phase-difference detection (LCG PD) data; and
the readout circuit is configured to synthesize the HCG PD data and the LCG PD data to generate synthesized PD data as the image data.

2. The image sensing device according to claim 1, wherein:
the pixel array is arranged in a Bayer pattern.

3. The image sensing device according to claim 1, wherein:
a number of the LCG pixels is fewer than a number of the HCG pixels.

4. The image sensing device according to claim 1, wherein the readout circuit includes:
an analog-to-digital converter (ADC) configured to convert the pixel signal into a digital signal to output phase-difference detection (PD) data;
a phase-difference detection (PD) data processor configured to process the PD data to generate the HCG PD data and the LCG PD data; and
a synthesizer configured to synthesize the HCG PD data and the LCG PD data to generate the synthesized PD data.

5. The image sensing device according to claim 4, wherein the PD data processor is configured to:
process the HCG PD data in a first mode; and
process the LCG PD data in a second mode.

6. The image sensing device according to claim 5, wherein:
the first mode and the second mode are set by a user input.

7. The image sensing device according to claim 4, wherein the PD data processor is configured to:
generate a first image set using the HCG pixels; and
generate a second image set using the LCG pixels.

8. The image sensing device according to claim 7, wherein:
a size of each of the first image set and the second image set is equal to a size of the pixel array.

9. The image sensing device according to claim 7, wherein:
a size of each of the first image set and the second image set is less than a size of the pixel array.

10. The image sensing device according to claim 7, wherein the PD data processor is configured to:
replace the LCG pixels with the HCG pixels by adding a specific gain to the LCG pixels; and
generate the first image set.

11. The image sensing device according to claim 7, wherein the PD data processor is configured to:
generate the first image set by correcting the LCG PD data with reference to the HCG pixel.

12. The image sensing device according to claim 7, wherein the PD data processor is configured to:
generate the second image set by upscaling the LCG PD data.

13. The image sensing device according to claim 7, wherein the PD data processor is configured to:
generate the second image set by expanding the LCG PD data.

14. The image sensing device according to claim 1, wherein the PD data processor is configured to:
process the HCG PD data and the LCG PD data based on reference setting information.

15. The image sensing device according to claim 4, wherein the synthesizer is configured to:
multiply the LCG PD data by a specific gain in a second time section after a first time section; and
output the HCG PD data as the synthesized PD data when the HCG PD data is not saturated in the second time section.
